# EUROPÄISCHE PATENTANMELDUNG

(11) **EP 1 279 986 A1**
(43) Veröffentlichungstag der Anmeldung: **29.01.2003**
(21) Anmeldenummer: 02102053.2
(22) Anmeldetag: 23.07.2002
(51) Int. Cl.: G02B 21/32

(54) **Anordnung zum Mikromanipulieren von biologischen Objekten**

(30) Priorität: 27.07.2001 DE 10136481
(71) Anmelder: Leica Microsystems Wetzlar GmbH, 35578 Wetzlar (DE)
(72) Erfinder: Eijsackers, Marcel Johan, 3315 DN Dordrecht (NL); Kleine, Bernhard, 35440 Linden (DE); Peter, Katja, Dr., 35578 Wetzlar (DE); Wittke, Werner, 35619, Braunfels (DE)
(74) Vertreter: Reichert, Werner F., Dr.

(57) **Zusammenfassung**

Es wird eine Anordnung zum Mikromanipulieren von biologischen Objekten (16) beschrieben, die ein Mikroskop (1, 14) mit mindestens einem motorisch verstellbaren Mikroskop-Funktionselement und mindestens einen motorisch verstellbaren Mikromanipulator (7, 13) mit einem Injektor (20, 21) umfasst. Erfindungsgemäß ist der Anordnung mindestens ein Bedienpult (8, 23, 24) zugeordnet, welches mindestens ein Bedienelement (9, 37, 38, 39) zur Bedienung des sowohl mindestens einen motorisch verstellbaren Mikroskop-Funktionselements als auch des mindestens einen motorisch verstellbaren Mikromanipulators (7, 13) aufweist. Daher können die wichtigsten Funktionen des Mikroskops (7, 13), des Mikroskoptisches (4) sowie des Mikromanipulators (7, 13) an dem Bedienpult (8, 23, 24) zentral ausgeführt werden können. Die Bedienelemente (9, 37, 38, 39) sind ergonomisch so am Bedienpult (8, 23, 24) angebracht, dass die Hände eines Benutzers der Anordnung während des Arbeitens am Bedienpult (8, 23, 24) bleiben können.

## Beschreibung

Die Erfindung betrifft eine Anordnung zum Mikromanipulieren von biologischen Objekten, die ein Mikroskop mit mindestens einem motorisch verstellbaren Mikroskop-Funktionselement und mindestens einem motorisch verstellbaren Mikromanipulator umfasst.

Solche Anordnungen werden verwendet zur Durchführung von mikroskopischen Manipulationen und Injektionen am lebenden Material, wie z.B. Zellverbänden, Gewebe, Organe, Zellen, Zellbestandteilen, Embryos pflanzlicher oder tierischer Art. Bekannt sind Mikromanipulatoren mit mechanischen, hydraulischen, piezo-elektrischen oder motorischen Antrieben. Sie werden mittels Bedienelementen gesteuert. Ein an dem Mikromanipulator gehalterter Injektor, auch als Injektionskapillare bezeichnet, ermöglicht die Injektion von gewünschten Substanzen oder Zellbestandteilen in einzelne Zellen. Es gibt Injektoren mit mechanischen, pneumatischen und hydraulischen Antrieben, die über Bedienelemente gesteuert werden. Die verwendeten Mikroskope besitzen mechanische als auch teilweise motorisch ansteuerbare Funktionen, die mit unterschiedlichen Bedienelementen gesteuert werden.

Die verwendeten Anordnungen zeichnen sich daher durch eine Vielzahl separater, an verschiedenen Stellen angeordneter Bedienelemente für die Mikroskopfunktionen, den Mikromanipulator und den Injektor aus. Der Benutzer muss daher mit den Händen oft zwischen den verschiedenen Bedienelementen wechseln, was sehr ermüdend ist. Außerdem resultiert daraus ein langsamerer Ablauf des Experiments sowie ein geringerer Durchsatz an Experimenten.

Die EP 0 292 899 B1 beschreibt ein Verfahren zur Mikroinjektion in Zellen bzw. zum Absaugen aus einzelnen Zellen oder ganzer Zellen aus Zellkulturen. Die dazu verwendete Vorrichtung besteht aus einem Mikroskop mit einem motorisch xy-verfahrbaren Mikroskoptisch und einem motorisch höhenverstellbaren Mikromanipulator zur Halterung einer Injektionskapillare. Zur motorischen Ansteuerung der Mikroskoptisch-Position und der Höhen-Position des Mikromanipulators werden ein Rechner, ein zugeordneter Monitor und ein Graphiktablett benutzt. Die Einstellung der xy-Position des Mikromanipulators erfolgt mittels zweier Stellknöpfe direkt an dem Mikromanipulator, d.h. an dem Mikroskop.

Auch die hier beschriebene Vorrichtung erfordert von dem Benutzer ein ständiges Umgreifen bzw. Umorientieren zwischen dem Rechner, dem Monitor, dem Graphiktablett und den Stellknöpfen für die Einstellung der xy-Position des Mikromanipulators. Auch hier resultiert daraus ein Ermüden des Benutzers sowie ein langsamerer Ablauf des Experiments sowie ein geringerer Durchsatz an Experimenten.

Es ist daher Aufgabe der vorliegenden Erfindung, eine Anordnung zum Mikromanipulieren von biologischen Objekten anzugeben, welche ein ergonomisches Arbeiten erlaubt und den erzielbaren Durchsatz an Experimenten erhöht.

Die Aufgabe wird gelöst durch eine Anordnung zum Mikromanipulieren von biologischen Objekten, die ein Mikroskop mit mindestens einem motorisch verstellbaren Mikroskop-Funktionselement und mindestens einem motorisch verstellbaren Mikromanipulator mit einem Injektor umfasst, welche sich dadurch auszeichnet, dass dem Mikroskop und dem mindestens einen Mikromanipulator mindestens ein gemeinsames Bedienpult zugeordnet ist. Das Bedienpult weist mindestens ein Bedienelement zur Bedienung des sowohl mindestens einen motorisch verstellbaren Mikroskop-Funktionselements als auch des mindestens einen motorisch verstellbaren Mikromanipulators auf.

Als Mikroskop kann sowohl ein inverses als auch ein aufrechtes Mikroskop mit einer Auflichtanordnung oder einer Durchlichtanordnung verwendet werden. Für die Untersuchung von biologischen Objekten ist es üblich, mit einer Durchlichtanordnung zu arbeiten. Bei dem motorisch verstellbaren Mikroskop-Funktionselement kann es sich beispielsweise um eines der folgenden Elemente handeln:
- einen motorisch xy-verfahrbarer oder drehbarer Mikroskoptisch,
- einen motorisch höhenverfahrbaren z-Trieb des Mikroskoptisches oder des Objektivs zur Einstellung der Fokusebene,
- eine motorisch verfahrbare Objektiv-Wechselvorrichtung mit mehreren Objektiven (3) zum wahlweisen Einbringen eines der Objektive (3) in den Beleuchtungsstrahlengang,
- eine motorisch verstellbare Fluoreszenzfilter-Wechseleinrichtung mit mehreren Fluoreszenz-Filtern zur Einstellung eines von mehreren Fluoreszenz-Verfahren,
- eine motorisch verstellbare Durchlichtfilter-Wechseleinrichtung,
- eine motorisch verstellbare Filter-Wechseleinrichtung mit mehreren Filtern zur Einstellung eines von mehreren Kontrastierungsverfahren,
- eine motorisch verstellbare Filter-Wechseleinrichtung mit mehreren Farb- und/oder Dämpfungsfiltern zur Einstellung des Spektrums oder der Helligkeit des Beleuchtungs- und/oder Abbildungslichts des Mikroskops,
- eine motorische Video-Ausgang-Steuerung,
- einen motorisch verstellbaren Kondensor,
- eine motorische Lichtsteuerung oder
- eine motorische Tubuslinsen-Wechseleinrichtung.

Die Bedienung von Kombinationen aus mehreren der genannten Mikroskop-Funktionselemente ist natürlich möglich. Von dem gemeinsamen Bedienpult aus können mittels zugeordneter Bedienelemente sowohl ein beliebiges Mikroskop-Funktionselement als auch der Mikromanipulator bzw. die Mikromanipulatoren bedient werden. Die erfindungsgemäße Anordnung kann ein, zwei oder mehrere Mikromanipulatoren aufweisen.

Die Vernetzung der zentral ansprechbaren motorisch verstellbare Mikroskop-Funktionselemente und des mindestens einen motorisch verstellbaren Mikromanipulators kann durch das Bedienpult selber erfolgen. Dazu wird eine entsprechende Steuereinheit in das Bedienpult integriert. Allerdings hat dies den Nachteil, dass die Steuereinheit eine erheblichen Einbauraum erfordert und dadurch das Bedienpult sehr groß wird. Außerdem ist die Wärmeentwicklung nicht unerheblich, was von dem Benutzer nicht immer als angenehm empfunden wird. Es ist auch denkbar, die Steuereinheit in das Mikroskop selbst einzubauen. Allerdings ist dies wegen der Wärmeentwicklung der Steuereinheit ungünstig, weil die zu manipulierenden biologischen Objekte vor zu großen Temperaturen geschützt werden müssen, da es sich meistens um lebende Zellen bzw. Zellkulturen handelt.

Daher ist in einer vorteilhaften Ausführungsform eine separate elektronische Steuereinheit vorgesehen, welche das mindestens eine motorisch verstellbare Mikroskop-Funktionselement, den mindestens einen motorisch verstellbaren Mikromanipulator und das mindestens eine Bedienpult vernetzt. Dazu ist die Steuereinheit mit dem Mikroskop, dem Mikromanipulator und dem Bedienpult verbunden. Die Steuereinheit kann beliebig positioniert werden.

In einer vorteilhaften Ausführungsform weist das gemeinsame Bedienpult mindestens ein Speicher-Bedienelement mit einem zugeordnetem Speicher für die Speicherung und den Abruf mindestens einer vordefinierten Fokusebene auf. Damit ist ein schnelles Wieder-Auffinden der Fokusposition für Routinearbeiten möglich. Wenn beispielsweise mehrere Objektive mit unterschiedlichen Abbildungsmaßstäben oder unterschiedlichen Arbeitsabständen verwendet werden, können die unterschiedlichen Fokusebenen über das zugehörige Bedienelement am gemeinsamen Bedienpult gespeichert und abgerufen werden. Bei Abruf der Fokusposition zu einem vorher bestimmten Objektiv, wird dann der höhenverfahrbare z-Trieb des Mikroskoptisches oder des Objektivs bis zum Erreichen der abgespeicherten Fokusebene motorisch verfahren.

Zusätzlich können zu jedem Objektiv mehrere Fokusebenen abgespeichert und nach Betätigen eines zugeordneten Bedienelementes angefahren werden. Dies wird beispielsweise bei Untersuchung von Zellen benutzt, um wahlweise die Oberfläche oder den Zellkern oder die Unterseite der Zelle anzufahren. Eine weitere Fokusebene kann auf die Spitze des Mikromanipulators gelegt werden, um jederzeit nach Betätigen des zugeordneten Bedienelementes die Qualität (z.B. Schärfe, Form, etc.) der Spitze kontrollieren zu können.

In einer vorteilhaften Ausführungsform der erfindungsgemäßen Anordnung kann zu jedem Objektiv ein individueller Wert für die Fokussierschrittweite abgespeichert werden. Diese Fokussierschrittweite gibt an, mit welcher Schrittweite (z.B. eines Schrittmotors) in z-Richtung beim Fokussieren verfahren wird. Bei hoch vergrößernden Objektiven, die sich durch einen geringen Fokussierweg und eine geringe Tiefenschärfe auszeichnen, ist daher eine geringe Fokussierschrittweite erforderlich. Bei schwach vergrößernden Objektiven, die sich durch einen langen Fokussierweg und eine große Tiefenschärfe auszeichnen, ist daher eine große Fokussierschrittweite möglich bzw. erforderlich. Beim Einschwenken eines bestimmten Objektivs (nach Betätigen der Objektiv-Wechselvorrichtung) wird dann die Fokussierschrittweite automatisch auf den vorher abgespeicherten Wert eingestellt, wodurch mit jedem Objektiv ein individuell schnelles bzw. langsames Fokussieren in entsprechend großen oder kleine Schrittweiten erfolgen kann.

Weiterhin kann zu jedem Objektiv ein Helligkeitswert abgespeichert werden, wobei typischerweise für schwache vergrößernde (lichtstarke) Objektive ein kleiner Helligkeitswert und für stark vergrößernde (lichtschwache) Objektive ein großer Helligkeitswert vorgewählt wird. Beim Einschwenken eines bestimmten Objektivs (nach Betätigen der Objektiv-Wechselvorrichtung) wird dann die Helligkeit des Beleuchtungslichts automatisch auf den vorher abgespeicherten Helligkeitswert geregelt.

In einer weiteren vorteilhaften Ausgestaltung der Anordnung ist auch für den Mikromanipulator eine Vorauswahl häufig benötigter Positionen möglich. Dazu weist das mindestens eine gemeinsame Bedienpult mindestens ein Speicher-Bedienelement mit einem zugeordnetem Speicher auf, das für die Speicherung und den Abruf mindestens einer vordefinierten Positionseinstellung des motorisch verstellbaren Mikromanipulators, bzw. der motorisch verstellbaren Mikromanipulatoren, auf. Bei den vorgewählten und abgespeicherten Positionen handelt es sich üblicherweise um Positionen bei der Routineanwendung der Mikrokapillare, beispielsweise die Position der Kapillarspitze zum Durchstechen der Zellmembran oder die Position zum Injizieren bestimmter Objekte in den Zellkern.

Weiterhin kann das motorisch verstellbare Mikroskop-Funktionselement als eine motorisch verstellbare Filter-Wechseleinrichtung mit verschiedenen Filtern ausgebildet sein. Dabei können die Filter beispielsweise zur Einstellung eines von mehreren Kontrastierungsverfahren aufweist. Es kann sich auch um mehrere Fluoreszenz-Filter zur Einstellung eines von mehreren Fluoreszenz-Verfahren handeln.

Bei Fluoreszenz-Untersuchungen können zusätzlich motorisch verstellbare Graufilter oder Verschlüsse (englisch: "shutter") im Beleuchtungsstrahlengang vorgesehen sein. Diese ermöglichen ein Dämpfen der Intensität oder ein vollständiges Verschließen des Beleuchtungsstrahlengangs, um (beispielsweise in Arbeitspausen) das zu beobachtende und zu manipulierende biologische Objekt vor ungewolltem Erwärmen oder Ausbleichen zu schützen.

In einer anderen Variante der Filter-Wechseleinrichtung sind mehrere Farbund/oder Dämpfungsfilter zur Einstellung des Spektrums oder der Helligkeit des Beleuchtungs- und/oder Abbildungslichts des Mikroskops angeordnet.

In einer vorteilhaften Ausführungsform sind an dem Mikroskop ein Video-Ausgang bzw. mehrere Video-Ausgänge vorgesehen. An jedem Video-Ausgang kann jeweils ein Kamera-Adapter und daran eine Kamera angesetzt werden. Das Mikroskopbild wird dann auf die Kamera übertragen und auf einem Monitor dargestellt. In einer vorteilhaften Ausgestaltung weist die erfindungsgemäße Anordnung als motorisch verstellbares Mikroskop-Funktionselement eine motorisierte Video-Ausgang-Steuerung auf, die das Abbildungslicht ganz oder teilweise auf einen oder mehrere Video-Ausgänge umlenkt. Die teilweise Umlenkung kann mittels motorisch verfahrbarer Prismen oder Filtern bzw. Strahlteilern in Form einer Intensitätsaufteilung oder in Form einer Farbaufteilung (d.h. durch Auswahl bestimmter Wellenlängenbereiche) erfolgen.

Weitere motorische Mikroskop-Funktionselemente, die über das gemeinsame Bedienpult für das Mikroskop und den Mikromanipulator angesteuert werden können, sind beispielsweise ein motorisch verstellbarer Kondensor und eine motorische Lichtsteuerung. Der motorisch verstellbare Kondensor dient zum Wechseln von im Kondensor angeordneten Komponenten, z.B. zum Wechseln von Phasenringen oder zum Wechseln von Wollaston-Prismen, die für das Differential-Interferenz-Kontrastverfahren (DIC) erforderlich sind. Die motorische Lichtsteuerung dient zur Helligkeitssteuerung im Strahlengang, z.B. durch Einfügen und Entfernen von Filtern und Verschlüssen.

Selbstverständlich ist es auch möglich, Kombinationen aus den genannten motorisch verstellbaren Mikroskop-Funktionselementen und dem motorisch verstellbaren Mikromanipulator (bzw. mehreren Mikromanipulatoren) von dem gemeinsamen Bedienpult aus zu steuern.

Dabei ist in einer vorteilhaften Ausführungsform an dem Bedienpult mindestens ein Speicher-Bedienelement mit einem zugeordnetem Speicher vorgesehen, das für die Speicherung und den Abruf mindestens einer vordefinierten Einstellung mindestens eines der motorisch verstellbaren Mikroskop-Funktionselemente vorgesehen ist.

Das Bedienpult kann am Mikroskop angeordnet oder auch in das Mikroskop-Gehäuse integriert sein. Als besonders vorteilhaft hat sich erwiesen, wenn das Bedienpult separat vom Mikroskop angeordnet ist, da dann die Position des Bedienpultes, z. B. auf dem Labortisch, von dem Benutzer entsprechend seiner individuellen Ergonomie selbst gewählt werden kann.

Wenn an dem Mikroskop zwei oder mehr Mikromanipulatoren angeordnet sind, kann ein einziges Bedienpult vorgesehen werden, das jeweils mindestens ein Bedienelement für mindestens einen der Mikromanipulatoren aufweist. Dies hängt davon ab, welche Funktionen an dem Mikromanipulator motorisiert zur Verfügung stehen.

Wenn an dem Mikroskop insbesondere genau zwei Mikromanipulatoren angeordnet sind, kann ein einziges Bedienpult angeordnet werden, das zwei separate Bedienelemente für die jeweilige xy-Verstellung und/oder die Höhenverstellung der beiden Mikromanipulatoren aufweist. Dabei erweist sich eine Ausführungsform als besonders benutzerfreundlich, bei der diese beiden Bedienelemente je einer Hand eines Benutzers zugeordnet sind. Diese handspezifische Zuordnung erweist sich als sehr benutzerfreundlich, da sie dem Benutzer von Mikroskopen, z.B. von der manuellen Verstellung des Mikroskoptisches, vertraut ist.

Wenn an dem Mikroskop zwei oder mehr Mikromanipulatoren angeordnet sind können zwei gemeinsame Bedienpulte vorgesehen werden, von denen jedes mindestens ein Bedienelement für mindestens einen der Mikromanipulatoren und mindestens ein motorisch verstellbares Mikroskop-Funktionselement aufweist. Durch die Verwendung von zwei Bedienpulten können beispielsweise die Bedienelemente, die entweder bestimmten Funktionen oder bestimmten Mikroskop-Funktionselementen oder Mikromanipulatoren zugeordnet sind, auf dem einen bzw. dem anderen Bedienpult gruppiert werden. Dies erleichtert das Erlernen der Bedienung durch den Benutzer erheblich.

Um eine weiter gehende Nutzung der Anordnung zu erzielen, wird der Anordnung ein UV-Laser zugeordnet wird, dessen Laserstrahl mit einer Einkoppeloptik in das Mikroskop eingekoppelt wird. Zum Laserschneiden eines biologischen Objekts wird dieser eingekoppelte Laserstrahl mit einem Objektiv auf das biologische Objekt fokussiert. Damit wird in Ergänzung zu den Mikromanipulatoren bzw. den Injektoren die Funktionalität der Anordnung erheblich verbessert, da dadurch eine vor- oder nachbereitende Präparation mittels Laser-Mikrodissektion (Laser-Mikro-Schneiden) der zu manipulierenden biologischen Objekte möglich ist. Weiterhin kann der Anordnung ein IR-Laser zugeordnet sein, dessen Laserstrahl mit einer Einkoppeloptik in das Mikroskop eingekoppelt und mit einem Objektiv auf das biologische Objekt fokussiert wird. Der fokussierte IR-Laserstrahl wird zum Erfassen, Halten und Bewegen des biologischen Objekts verwendet. Zur Ansteuerung des UV-Lasers und/oder des IR-Lasers ist auf dem (mindestens einen) Bedienpult mindestens ein Bedienelement zur Steuerung der Laserfunktionen (z.B. An/Aus oder Fokus/Defokus) angeordnet.

Wesentlicher Teil der erfindungsgemäßen Anordnung ist ein zentral angeordnetes, für das Mikroskop und den Mikromanipulator bzw. die Mikromanipulatoren gemeinsam wirkendes Bedienpult, mit dem die wichtigsten Funktionen des Mikroskops, des Mikroskoptisches sowie des Mikromanipulators zentral ausgeführt werden können. Die Bedienelemente sind so am Bedienpult angebracht, dass die Hände des Benutzers während des Arbeitens am Bedienpult bleiben können und alle Funktionen raumnah erreicht werden können. Durch eine ergonomische und anwenderfreundlichen Gestaltung des Bedienpults wird ein Ermüden der Hände und der Handgelenke vermieden.

Die Erfindung wird nachfolgend anhand der schematischen Zeichnung näher erläutert. Es zeigen:
- ***Fig. 1*:**: eine Anordnung zum Mikromanipulieren von biologischen Objekten mit einem inversen Mikroskop, einem Mikromanipulator und einem gemeinsamen Bedienpult;
- ***Fig. 2*:**: eine Anordnung zum Mikromanipulieren von biologischen Objekten mit einem inversen Mikroskop, zwei Mikromanipulatoren und einem gemeinsamen Bedienpult;
- ***Fig. 3*:**: eine Anordnung zum Mikromanipulieren von biologischen Objekten mit einem aufrechten Mikroskop, zwei Mikromanipulatoren und zwei gemeinsamen Bedienpulten;
- ***Fig. 4***:: eine Anordnung zum Mikromanipulieren von biologischen Objekten mit einem aufrechten Mikroskop mit einem eingekoppelten Laserstrahl, zwei Mikromanipulatoren und zwei gemeinsamen Bedienpulten;
- ***Fig. 5***:: eine Anordnung zum Mikromanipulieren von biologischen Objekten mit einem inversen Mikroskop, zwei Mikromanipulatoren und zwei gemeinsamen Bedienpulten;

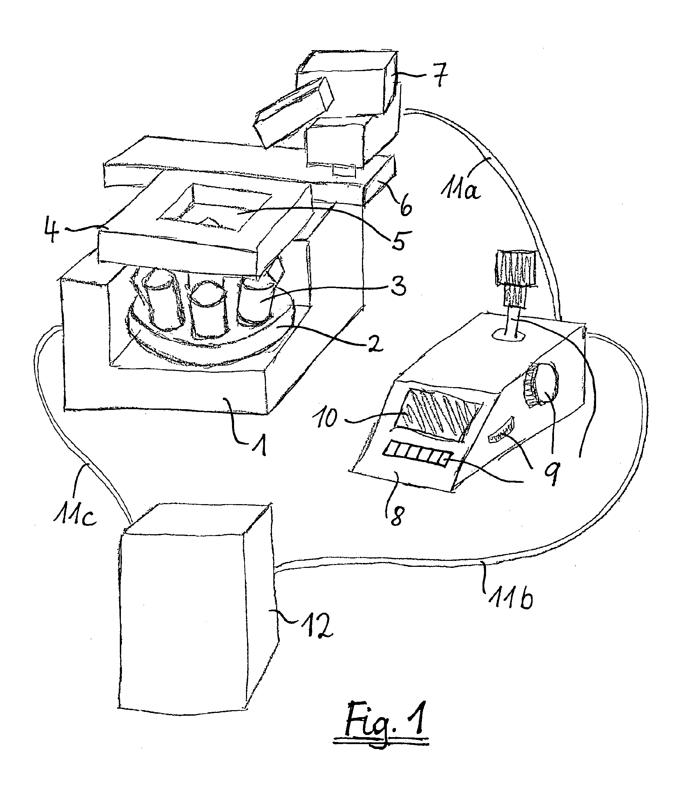

***Fig. 1*** zeigt eine Anordnung zum Mikromanipulieren von biologischen Objekten, die auf einem inversen Mikroskop 1 basiert. Das Mikroskop 1 ist stark schematisiert dargestellt, um eine gute Übersichtlichkeit der Darstellung zu erreichen. An dem Mikroskop 1 ist eine Objektiv-Wechselvorrichtung 2 mit mehreren Objektiven 3 angeordnet. Oberhalb der Objektive 3 ist an dem inversen Mikroskop 1 ein motorisierter Mikroskoptisch 4 zur Aufnahme von biologischen Objekten (hier nicht dargestellt) angeordnet. Der Mikroskoptisch 4 weist eine innenliegende Öffnung 5 auf, durch welche die biologischen Objekte im Durchlicht beleuchtet und betrachtet werden können. Dazu ist oberhalb des Mikroskoptischs 4 ein Beleuchtungsstrahlengang mit einem Kondensor (beides nicht dargestellt) angeordnet. An dem Mikroskop 1 ist ein Adapter 6 angebracht, der zur Befestigung von Mikromanipulatoren vorgesehen ist. An diesem Adapter 6 ist ein motorisierter Mikromanipulator 7 angeordnet. Die Antriebe für die Bewegung des Mikromanipulators 7 in den drei Raumrichtungen x, y, und z sind zur Vereinfachung nicht dargestellt.

Für das Mikroskop 1 und den Mikromanipulator 7 ist ein gemeinsames Bedienpult 8 vorgesehen. Das Bedienpult 8 weist mehrere Bedienelemente 9 zur Bedienung der motorisch verstellbaren Mikroskop-Funktionselemente sowie des motorisierten Mikromanipulators 7 auf. Der Begriff "motorisch verstellbare Mikroskop-Funktionselemente" ist als übergreifende Sammelbezeichnung für alle Funktionselemente am Mikroskop zu verstehen, die motorisch verstellbar sind. Dabei kann es sich im dargestellten Beispiel sowohl um die Objektiv-Wechselvorrichtung 2 als auch um den motorisierten Mikroskoptisch 4 handeln. Die Bedienelemente 9 können jeweils bestimmten Mikroskop-Funktionselementen oder bestimmten Funktionen des Mikromanipulators 7 zugeordnet sein. Es ist aber auch denkbar, ein Bedienelement 9 mehreren Funktionselementen bzw. Mikromanipulator-Funktionen zuzuordnen, wobei die jeweils gewünschte Funktion aktiviert werden kann. In dem vorliegenden Beispiel weist das Bedienpult 8 zusätzlich ein Anzeigeelement 10 (z. B. ein LCD-Display) auf, mit dem die angesprochenen Mikroskop-Funktionselemente oder die vorgenommenen Einstellungen an dem inversen Mikroskop 1 oder an dem Mikromanipulator 7 angezeigt werden können.

Das Bedienpult 8 ist mit einer Steuerleitung 11 a mit dem motorisierten Mikromanipulator 7 und mit einer Steuerleitung 11b mit einer separat angeordneten Steuereinheit 12 verbunden. Diese Steuereinheit 12 wiederum ist mit einer Steuerleitung 11c mit den motorisierten Mikroskop-Funktionselementen im Mikroskop 1 verbunden. Diese Steuereinheit 12 dient dazu, die motorisch verstellbaren Mikroskop-Funktionselemente und den motorisch verstellbaren Mikromanipulator 7 und das gemeinsame Bedienpult 8 zu vernetzen. Es ist natürlich auch möglich, die Steuereinheit 12 entweder in das Bedienpult 8 oder in das inverse Mikroskop 1 zu integrieren. Da jedoch von der Steuereinheit 12 eine erhebliche Wärmeentwicklung ausgeht, wurde in der hier dargestellten Ausführung der Anordnung zum Mikromanipulieren von biologischen Objekten die Steuereinheit 12 separat angeordnet. In der Fig. 1 erscheint es, als wenn diese Steuereinheit 12 auf demselben Labortisch wie das Mikroskop 1 und das Bedienpult 8 stünde. Dies ist jedoch nur aus Gründen der Anschaulichkeit so dargestellt. In der Realität wird die Steuereinheit 12 möglichst weit entfernt von dem Mikroskop 1 aufgestellt, beispielsweise unter dem Labortisch. Damit ist dann auch für einen Benutzer der erfindungsgemäßen Anordnung das Bedienpult 8 leicht und ergonomisch zugänglich.

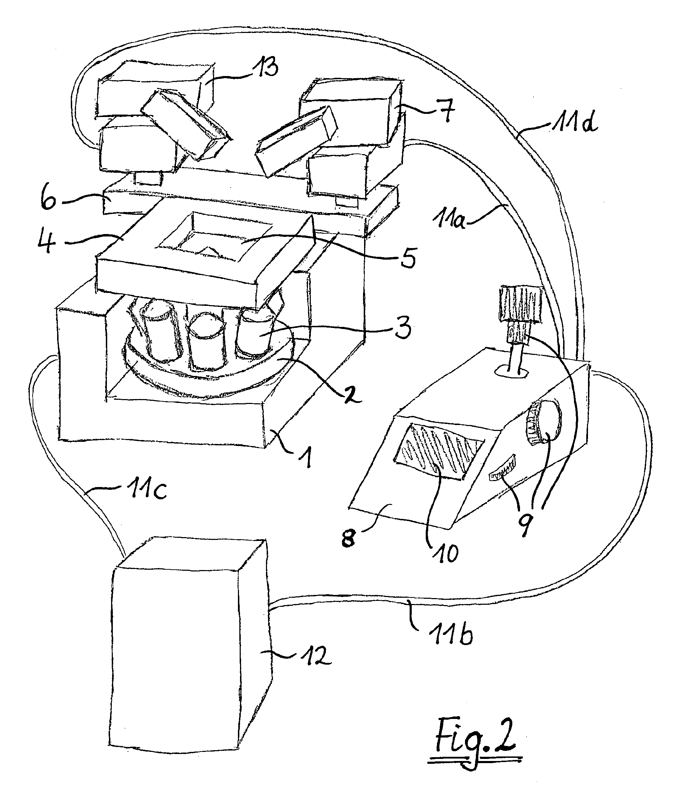

***Fig. 2*** zeigt eine Anordnung zum Mikromanipulieren von biologischen Objekten, die gegenüber der Darstellung in Fig. 1 mit einem zweiten Mikromanipulator ausgestattet ist.

Ein inverses Mikroskop 1 weist eine Objektiv-Wechselvorrichtung 2 mit mehreren daran befestigten Objektiven 3 und einen motorisierten Mikroskoptisch 4 auf. Aus Gründen der Übersichtlichkeit der Darstellung wurde ein oberhalb des Mikroskoptisches 4 angeordneter Beleuchtungsstrahlengang mit einem Kondensor hier nicht dargestellt.

An dem Mikroskop 1 ist ein Adapter 6 angebracht, der zur Befestigung von Mikromanipulatoren dient. Auf diesem Adapter 6 sind ein erster motorisierter Mikromanipulator 7 und ein zweiter motorisierter Mikromanipulator 13 befestigt. Beide Mikromanipulatoren 7, 13 können in den drei Raumrichtungen x, y und z bewegt werden. Sie dienen zur Aufnahme von Injektoren (hier nicht dargestellt), mit denen biologische Objekte manipuliert werden können. Die Art der Manipulation kann das Einspritzen oder Aussaugen von Flüssigkeiten oder Zellkomponenten oder ähnliche Eingriffe umfassen.

Dem Mikroskop 1 mit seinen motorisierten Mikroskop-Funktionselementen, hier der motorisierten Objektiv-Wechselvorrichtung 2 und dem motorisierten Mikroskoptisch 4, und den beiden Mikromanipulatoren 7 und 13 ist ein gemeinsames Bedienpult 8 zugeordnet. Dieses Bedienpult 8 ist mit einer Steuerleitung 11a mit dem ersten motorisierten Mikromanipulator 7 und mittels einer Steuerleitung 11d mit dem zweiten motorisierten Mikromanipulator 13 verbunden.

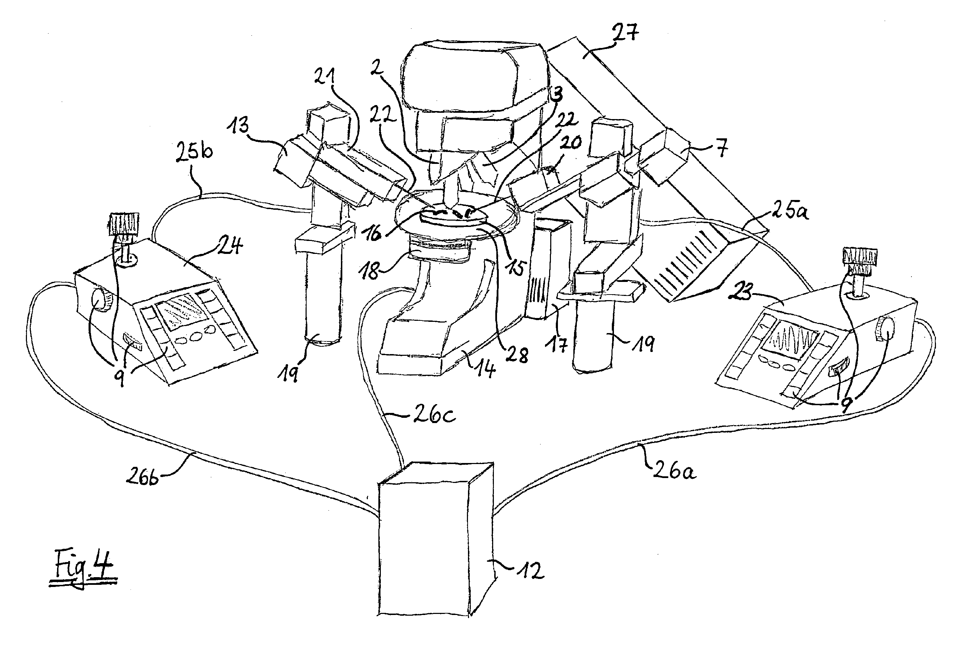

Der Anordnung ist eine Steuereinheit 12 zugeordnet, die mit einer Steuerleitung 11b mit dem Bedienpult 8 und mit einer Steuerleitung 11c mit dem Mikroskop 1, d. h. mit den motorisierten Mikroskop-Funktionselementen, verbunden ist. Die Steuereinheit 12 vernetzt die von dem Bedienpult 8 angesprochenen Funktionselemente des Mikroskops 1 und die gesteuerten Mikromanipulatoren 7, 13. In der Steuereinheit 12 oder dem Bedienpult 8 sind Speicher (Datenspeicher oder Bildspeicher) zum Ablegen bestimmter Informationen, die für die Bedienung der Mikroskop-Funktionselemente oder der Mikromanipulatoren 7, 13 erforderlich sind, vorgesehen. Das Bedienpult 8 weist mehrere Bedienelemente 9 auf, die den verschiedenen motorisch betriebenen Funktionselementen des Mikroskops 1 und/oder den beiden Mikromanipulatoren 7, 13 (oder auch nur einem von diesen) zugeordnet sind. Einzelheiten zu den Bedienelementen sind bei Fig. 4 beschrieben. Die dargestellte Art der Vernetzung von Mikroskop 1, Mikromanipulatoren 7, 13, Bedienpult 8 und Steuereinheit 12 kann auch anders als in der hier dargestellten Weise erfolgen. Die Art der Vernetzung ist beispielsweise abhängig von den verwendeten Schnittstellen oder Daten-Übertragungsprotokollen.

Die Steuereinheit 12 kann auch in das Mikroskop 1 oder das Bedienpult 8 integriert sein. Um jedoch eine unerwünschte Wärmeentwicklung von dem Mikroskop 1 fernzuhalten, wurde in der hier dargestellten Anordnung eine separate Aufstellung der Steuereinheit 12 vorgezogen.

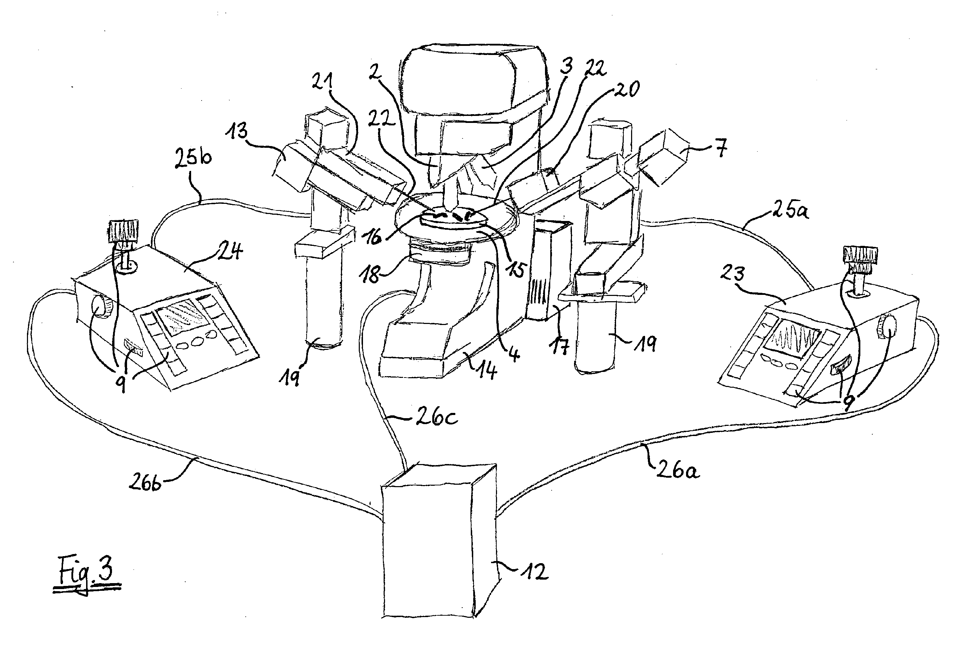

***Fig. 3*** zeigt eine erfindungsgemäße Anordnung zum Mikromanipulieren von biologischen Objekten, in der zwei Bedienpulte einem Mikroskop mit zwei zugeordneten Mikromanipulatoren vorgesehen sind.

Ein aufrechtes Mikroskop 14 weist eine motorisierte Objektiv-Wechselvorrichtung 2 mit mehreren daran angeordneten Objektiven 3 auf. Ein motorisierter Mikroskoptisch 4 (Antriebe nicht dargestellt) dient zur Aufnahme eines Gefäßes 15 mit darauf befindlichen biologischen Objekten 16. Von einem an dem Mikroskop 14 angeordneten Lampenhaus 17 geht ein (hier nicht dargestellter) Beleuchtungsstrahlengang aus, der durch einen Kondensor 18 auf die biologischen Objekte 16 gerichtet wird.

Zum Manipulieren der biologischen Objekte 16 sind ein erster motorisierter Mikromanipulator 7 und ein zweiter motorisierter Mikromanipulator 13 vorgesehen. Sie sind in dem hier dargestellten Beispiel separat vom Mikroskop auf Tragelementen 19 befestigt, welche mit dem Mikroskop nicht verbunden sind. Es ist aber auch denkbar, die Mikromanipulatoren so mit dem Mikroskop zu verbinden, wie es in den Fig. 1 und 2 bereits dargestellt wurde, also mittels eines Adapters direkt am Mikroskop.

An dem ersten motorisierten Mikromanipulator 7 ist ein erster Injektor 20 und an dem zweiten motorisierten Mikromanipulator 13 ist ein zweiter Injektor 21 angeordnet. Die erforderlichen Druck-Steuerungseinrichtungen zur Steuerung des Drucks in den Injektoren 20, 21 (z. B. zum Injizieren oder zum Extrahieren von Flüssigkeiten oder Zellbestandteilen) sind zur Vereinfachung nicht dargestellt. Die Manipulationen an den biologischen Objekten werden mit Mikrokapillaren 22 vorgenommen, die an den Injektoren 20, 21 angeschlossen sind. Zum Durchführen exakter Operationen an den biologischen Objekten 16 (z.B. Injizieren von Flüssigkeiten oder Zellmaterial) muss die Spitze der jeweils angesteuerten Mikrokapillare 22 exakt positioniert werden.

Die Anordnung weist ein erstes Bedienpult 23 und ein zweites Bedienpult 24 auf. Das erste Bedienpult 23 ist mit einer Steuerleitung 25a mit dem ersten Mikromanipulator 7 verbunden. Das zweite Bedienpult 24 ist mit einer Steuerleitung 25b mit dem zweiten Mikromanipulator 13 verbunden. Zur Vernetzung des Mikroskops 14, der Mikromanipulatoren 7 und 13 sowie der beiden Bedienpulte 23 und 24 weist die Anordnung eine Steuereinheit 12 auf, welche diese Komponenten der Anordnung miteinander vernetzt. Dazu ist die Steuereinheit 12 mit einer Steuerleitung 26a mit dem ersten Bedienpult 23, mit einer Steuerleitung 26b mit dem zweiten Bedienpult 24 sowie mit einer Steuerleitung 26c mit dem Mikroskop 14 bzw. den motorisierten motorisch verstellbaren Mikroskop-Funktionselementen verbunden.

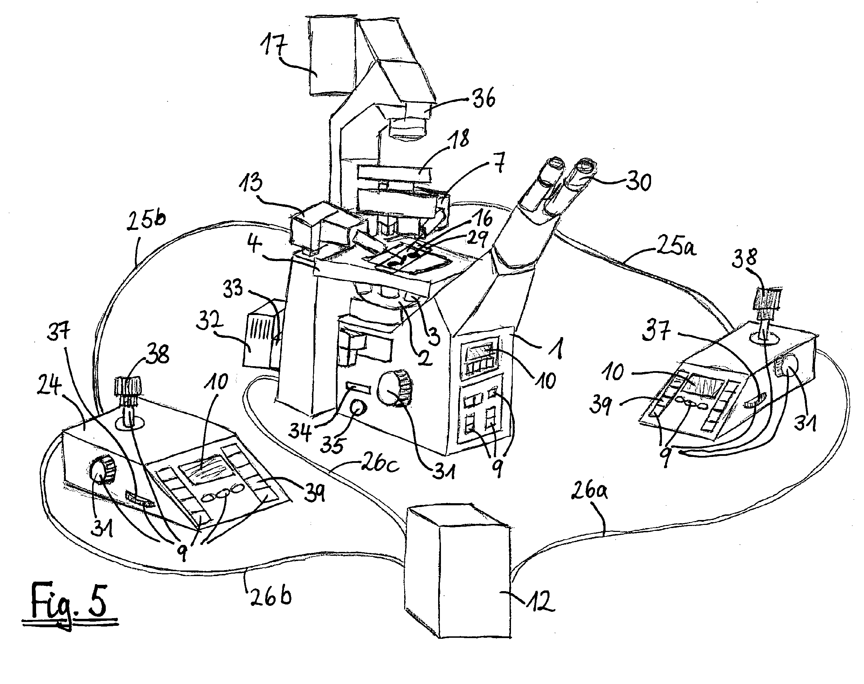

Die Steuereinheit 12 ist so konzipiert, dass die Bedienung des Mikroskops 14 bzw. seiner motorisierten Mikroskop-Funktionselemente (hier des motorisierten Mikroskoptischs 4 und der motorisierten Objektiv-Wechselvorrichtung 2) sowie der beiden Mikromanipulatoren 7 und 13 alternativ sowohl von dem ersten Bedienpult 23 als auch von dem zweiten Bedienpult 24 aus erfolgen kann. Dazu weisen die beiden Bedienpulte 23, 24 eine Reihe von Bedienelementen 9 auf, die den verschiedenen motorisierten Funktionen am Mikroskop 14 oder den Mikromanipulatoren 7, 13 zugeordnet sind oder zugeordnet werden können. Einzelheiten zu den Bedienelementen 9 werden bei Fig. 5 beschrieben.

Die Steuereinheit 12 kann in das Mikroskop 14 oder in eines oder beide der Bedienpulte 23, 24 integriert werden. Da jedoch von der Steuereinheit 12, die Elektronik enthält, eine erhebliche Wärmeentwicklung ausgeht, wurde in der hier dargestellten Anordnung die Steuereinheit 12 separat aufgestellt. Damit wird eine unnötige Erwärmung der biologischen Elemente 16 vermieden. Ein weiterer Vorteil der separaten Anordnung der Steuereinheit 12 besteht darin, dass das Mikroskop 14 mit den daneben angeordneten Mikromanipulatoren 7, 13 in eine kleine, räumlich begrenzte Klimakammer (hier nicht dargestellt) eingebracht werden kann, während die Steuereinheit 12 außerhalb der Klimakammer angeordnet wird.

***Fig. 4*** zeigt eine Variante zu der Anordnung, die bereits in Fig. 3 beschrieben wurde. Die Anordnung besteht aus einem aufrechten Mikroskop mit einem manuell zu betätigenden Mikroskoptisch 28, einer Objektiv-Wechselvorrichtung 2 mit mehreren daran gehalterten Objektiven 3 und einem ersten Mikromanipulator 7 sowie einem zweiten Mikromanipulator 13. Die Bedienung der Mikroskop-Funktionselemente und der Mikromanipulatoren 7 und 13 erfolgt durch ein erstes gemeinsames Bedienpult 23 und ein zweites gemeinsames Bedienpult 24. Die Vernetzung der Anordnung erfolgt mit einer Steuereinheit 12. Diese ist mit einer Steuerleitung 26a mit dem ersten Bedienpult 23, mit einer Steuerleitung 26b mit dem zweiten Bedienpult 24 und mit einer Steuerleitung 26c mit dem Mikroskop 14 und damit seinen Mikroskop-Funktionselementen verbunden.

Die Durchlichtbeleuchtung der biologischen Objekte 16 in dem Gefäß 15 erfolgt mit einem von einem Lampenhaus 17 ausgehenden Beleuchtungsstrahlengang, der durch einen Kondensor 18 auf die biologischen Objekte gerichtet ist.

Zusätzlich zu der in Fig. 3 gezeigten Anordnung weist die hier dargestellte Ausführungsform der erfindungsgemäßen Anordnung eine zusätzliche Lichtquelle auf. Es handelt sich um einen Laser 27, dessen Laserstrahl im oberen Bereich des Mikroskops 14 in einen Auflichtstrahlengang (hier nicht dargestellt) eingekoppelt wird und mit einem der Objektive 3 auf die biologischen Objekte fokussiert wird.

Bei dem Laser kann es sich entweder um einen UV- oder einen IR-Laser handeln. Wenn die biologischen Objekte mittels Laserschneiden (Lasermikrodissektion) bearbeitet werden sollen, wird ein UV-Laser verwendet. Der UV-Laserstrahl wird dann im fokussierten Zustand zum Schneiden an den biologischen Objekten verwendet. Alternativ kann ein IR-Laser verwendet werden, dessen Laserstrahl ebenfalls mit einem Objektiv 3 auf ein biologisches Objekt 16 fokussiert werden kann. Das vom Fokus des IR-Laserstrahls erfasste biologische Objekt 16 (oder Teile davon) wird in diesen Laser-Fokus hineingezogen und kann dann durch Bewegen des Laser-Fokus festgehalten und mit dem Laser-Fokus mitbewegt werden. Dieses Prinzip wird häufig auch als "optische Pinzette" bezeichnet. Zur Ansteuerung des UV-Lasers und/oder des IR-Lasers ist auf mindestens einem der Bedienpulte 23, 24 ein Bedienelement 9 angeordnet, das zur Steuerung der Laserfunktionen dient. Bei den Laserfunktionen kann es sich handeln um: Einschalten/Ausschalten oder Steuerung der Pulsrate (bei gepulsten Lasern) oder Fokus/Defokus am Ort der biologischen Objekte oder Erhöhen/Erniedrigen der Intensität.

Die Bedienpulte 23 und 24 können unterschiedliche Bedienelemente 9 aufweisen. Es hat sich jedoch als vorteilhaft erwiesen, wenn die beiden Bedienpulte 23, 24 identisch aufgebaut sind, so dass sämtliche Funktionen, die mittels der Bedienelemente 9 angesprochen werden können, sowohl mit der linken Hand als auch der rechten Hand des Benutzers der Anordnung angesprochen werden können.

***Fig. 5*** zeigt eine erfindungsgemäße Anordnung mit einem inversen Mikroskop 1, das einen motorisierten Mikroskoptisch 4 aufweist. Ein von einem Lampenhaus 17 ausgehender Durchlichtbeleuchtungsstrahlengang (hier nicht dargestellt) wird durch einen Kondensor 18, der hier motorisiert ausgebildet ist, auf biologische Objekte 16 gerichtet, die auf einem Objektträger 29 angeordnet sind. Unterhalb des rahmenförmigen Mikroskoptischs 4 sind mehrere Objektive 3 an einer Objektiv-Wechselvorrichtung 2 angeordnet. Die visuelle Beobachtung des Mikroskopbilds der biologischen Objekte 16 kann durch Okulare 30 erfolgen. An dem Mikroskop 1 sind ein erster Mikromanipulator 7 und ein zweiter Mikromanipulator 13 angeordnet.

Zur Bedienung der Mikroskop-Funktionselemente und der beiden Mikromanipulatoren 7, 13 weist die Anordnung zwei Bedienpulte 23 und 24 auf. Das Bedienpult 23 ist mit einer Steuerleitung 25a mit dem Mikromanipulator 7 und das Bedienpult 24 ist mit einer Steuerleitung 25b mit dem Mikromanipulator 13 verbunden. Der Anordnung ist einer Steuereinheit 12 zur Vernetzung der Bedienpulte 23, 24, des Mikroskops 1 mit seinen Mikroskop-Funktionselementen und der beiden Mikromanipulatoren 7, 13 zugeordnet. Die Steuereinheit 12 ist mit einer Steuerleitung 26a mit dem Bedienpult 23, mit einer Steuerleitung 26b mit dem Bedienpult 24 und mit einer Steuerleitung 26c mit dem Mikroskop 1 verbunden. An den Bedienpulten 23 und 24 sind mehrere Bedienelemente 9 angeordnet, die eine Bedienung der Mikroskop-Funktionselemente und der beiden Mikromanipulatoren 7 und 13 erlauben.

In der hier dargestellten, besonders vorteilhaften Ausführungsform weist auch das Mikroskop 1 Bedienelemente 9 zur Betätigung seiner Mikroskop-Funktionselemente auf. Auf diese Weise ist es möglich, sowohl von einem der Bedienpulte 23 oder 24 als auch vom Mikroskop 1 aus selber die Bedienung bestimmter Funktionen vorzunehmen. So weist beispielsweise sowohl das Bedienpult 23 als auch das Bedienpult 24 und das Mikroskop 1 einen z-Triebknopf 31 zur Fokussierung des Mikroskops auf. Die technische Ausführung der Fokussierung kann in der Höhenverstellung des Mikroskoptisches 4 oder in der Höhenverstellung der Objektive 3 bzw. der Objektiv-Wechselvorrichtung 2 bestehen.

Nachstehend sollen einige der Mikroskop-Funktionselemente, die motorisiert ausgeführt sein können, näher erläutert werden. Das Mikroskop 1 ist zusätzlich zu dem Durchlichtlampenhaus 17 mit einem Fluoreszenzlampenhaus 32 ausgestattet. In dem von diesem Fluoreszenzlampenhaus 32 ausgehenden Fluoreszenzstrahlengang (nicht dargestellt) ist ein motorisierter Fluoreszenzfilter-Schieber 33 angeordnet. Im Abbildungsstrahlengang (hier nicht dargestellt) ist eine Tubuslinsen-Wechselvorrichtung 34 mit mehreren darauf angebrachten Tubuslinsen angeordnet. Da die Tubuslinsen mit den Objektiven 3 bezüglich der Bildkorrektur des Mikroskopbildes ein Kompensationssystem darstellen, muss jeweils die passende Tubuslinse dem richtigen Objektiv 3 zugeordnet werden. Mittels der motorisierten Tubuslinsen-Wechselvorrichtung 34 ist es für den Benutzer auf komfortable Weise möglich, diese Zuordnung jederzeit passend vorzunehmen.

Ebenso im Abbildungsstrahlengang sind mehrere Video-Ausgänge 35, von denen hier beispielhaft nur einer abgebildet ist, angebracht. An diesen Video-Ausgängen 35 wird ein Kamera-Adapter und daran eine Kamera (hier nicht dargestellt) angesetzt. Das Mikroskopbild wird dann auf die Kamera übertragen und kann auf einem Monitor dargestellt werden. Um das Abbildungslicht des Abbildungsstrahlengangs ganz oder teilweise auf einen oder mehrere dieser Video-Ausgänge 35 umzulenken, ist im unteren Teil des Mikroskops 1 eine motorisierte Video-Ausgang-Steuerung (hier nicht dargestellt) vorgesehen. Die teilweise Umlenkung des Abbildungslichts kann mittels motorisch beweglicher Prismen oder Filtern bzw. Strahlteilern dadurch geschehen, dass entweder eine Intensitätsaufteilung des Abbildungslichts oder eine Farbaufteilung (d. h. durch Auswahl bestimmter Wellenlängenbereiche) vorgenommen wir. Die Bedienung dieser Video-Ausgang-Steuerung kann durch ein jeweils zugeordnetes Bedienelement 9 sowohl auf dem Bedienpult 23 als auch dem Bedienpult 24 vorgenommen werden.

Als weiteres motorisiertes Mikroskop-Funktionselement weist das Mikroskop 1 eine motorisierte Durchlichtfilter-Wechselvorrichtung 36 auf. Sie erlaubt das motorisierte Einbringen bzw. Entfernen von Farbfiltern, Graufiltern etc. in den Durchlichtstrahlengang. Die Bedienung erfolgt durch ein zugeordnetes Bedienelement 9 auf dem Bedienpult 23 und/oder dem Bedienpult 24.

Die Bedienpulte 23 und 24 können unterschiedlich aufgebaut sein, weisen jedoch mit Vorteil dieselben Funktionselemente auf. So weisen sie jeweils ein Anzeige-Element 10 auf, das z. B. als reines LCD-Display ausgebildet sein kann, das aber auch als interaktives Display mit Tastflächen ausgebildet sein kann. Weiterhin weisen die Bedienpulte 23 und 24 in der hier dargestellten Ausführungsform ein Bedienrad 37 auf, das beispielsweise zur Steuerung der Helligkeit oder zur schrittweiten Einstellung bei der Fokussierung der Objektive oder zur Betätigung der z-Bewegung der Mikromanipulatoren 7 und 13 eingesetzt werden kann. Ein Bedienhebel 38, der in der Art eines Joysticks beweglich ist, kann wahlweise zur Steuerung der xy-Bewegung des Mikroskoptischs 4 oder der xy-Bewegung der Mikromanipulatoren 7 und/oder 13 eingesetzt werden.

In den beschriebenen Beispielen weist sowohl das Bedienrad 37 als auch der Bedienhebel 38 eine Doppelbelegung oder sogar Mehrfachbelegung mit Funktionen auf. Die Aktivierung der gewünschten Funktion kann beispielsweise durch Bedienung einer oder mehrerer der Tasten 39 erfolgen. Andere dieser Tasten 39 können beispielsweise zur Betätigung der motorisierten Objektiv-Wechselvorrichtung 2 oder zur Auswahl oder Steuerung bestimmter Manipulator-Betriebszustände benutzt werden. Das Anzeige-Element 10 dient dem Benutzer als Orientierung bei der Auswahl des jeweils gewünschten Bedienelements. So kann der jeweils aktivierte Betriebszustand, z. B. gewählte Fokuslage der Kapillarspitze oder gewähltes Objektiv oder gewählter Manipulator-Betriebszustand, angezeigt werden, und zusätzlich kann das auf den mehrfach belegten Bedienelementen (wie beispielsweise dem Bedienrad 37 oder dem Bedienhebel 38) aktivierte Mikroskop-Funktionselement bzw. die aktuell aktivierte Funktion der Mikromanipulatoren 7 und 13 angezeigt werden.

Als besonders vorteilhaft hat sich eine Ausführungsform der erfindungsgemäßen Anordnung erwiesen, bei der mittels der Steuereinheit 12 eine sogenannte Prioritätenüberwachung der beiden Bedienpulte 23 und 24 vorgenommen wird. Dabei wird von der Steuereinheit 12 erkannt, wenn beispielsweise an dem Bedienpult 23 eine bestimmte Funktion auf den Bedienhebel 38 gelegt wird. Dies kann beispielsweise durch Betätigung von Tasten geschehen, dies kann aber auch durch Überwachung der Inbetriebnahme des Bedienhebels 38 erfolgen. Sobald die Steuereinheit 12 registriert hat, dass beispielsweise der Bedienhebel 38 auf die Funktion "Mikroskoptisch in x-Richtung bzw. y-Richtung verfahren" aktiviert wurde, wird automatisch auf dem anderen Bedienpult, d. h. auf dem Bedienpult 24, diese Funktion ebenfalls auf den entsprechenden Bedienhebel 38 gelegt. Auf diese Weise wird verhindert, dass der Benutzer mit seiner linken Hand, die an dem Bedienpult 24 angreifen würde, versehentlich eine andere Funktion ansprechen würde, wenn er den Bedienhebel 38 berührt. Die Freigabe der Funktionsbelegung des Bedienhebels 38 erfolgt dann durch den Benutzer mit einer definierten Funktionsfreigabe, beispielsweise durch Drücken einer bestimmten der Tasten 39.

Mit der erfindungsgemäßen Anordnung ist ein sehr benutzerfreundliches und ergonomisches Arbeiten auch im Routinebetrieb möglich. Durch eine individuelle Gestaltung der Funktionsbelegung der beiden Bedienpulte 23 und 24 kann sich der Benutzer eine individuelle Arbeitsumgebung einrichten. Dies führt zu einem entspannten und ermüdungsfreien Arbeiten, was insbesondere für den Routinebetrieb erforderlich ist.

### Bezugszeichenliste

- 1.: inverses Mikroskop
- 2.: Objektiv-Wechselvorrichtung.
- 3.: Objektive
- 4.: Mikroskoptisch
- 5.: innen liegende Öffnung
- 6.: Adapter
- 7.: erster Mikromanipulator
- 8.: Bedienpult
- 9.: Bedienelemente
- 10.: Anzeige-Element
- 11.: Steuerleitungen (11a, b, c)
- 12.: Steuereinheit
- 13.: zweiter Mikromanipulator
- 14.: aufrechtes Mikroskop
- 15.: Gefäß
- 16.: biologische Objekte
- 17.: Lampenhaus
- 18.: Kondensor
- 19.: Trag-Elemente
- 20.: erster Injektor
- 21.: zweiter Injektor
- 22.: Mikrokapillare
- 23.: erstes Bedienpult
- 24.: zweites Bedienpult
- 25.: Steuerleitung (25a, b)
- 26.: Steuerleitung (26a, b, c)
- 27.: Laser
- 28.: manueller Mikroskoptisch
- 29.: Objektträger
- 30.: Okulare
- 31.: z-Triebknopf
- 32.: Fluoreszenz-Lampenhaus
- 33.: Fluoreszenzfilter-Wechselvorrichtung
- 34.: Tubuslinsen-Wechselvorrichtung
- 35.: Video-Ausgang
- 36.: Durchlichtfilter-Wechselvorrichtung
- 37.: Bedienrad
- 38.: Bedienhebel
- 39.: Tasten

## Patentansprüche

1. Anordnung zum Mikromanipulieren von biologischen Objekten (16), die ein Mikroskop (1, 14) mit mindestens einem motorisch verstellbaren Mikroskop-Funktionselement und mindestens einem motorisch verstellbaren Mikromanipulator (7, 13) mit einem Injektor (20, 21) umfasst,
**dadurch gekennzeichnet,**
**dass** dem Mikroskop (1, 14) und dem mindestens einen Mikromanipulator (7, 13) mindestens ein gemeinsames Bedienpult (8, 23, 24) zugeordnet ist, welches mindestens ein Bedienelement (9, 37, 38, 39) zur Bedienung des sowohl mindestens einen motorisch verstellbaren Mikroskop-Funktionselements als auch des mindestens einen motorisch verstellbaren Mikromanipulators (7, 13) aufweist.

2. Anordnung nach Anspruch 1, **dadurch gekennzeichnet,**
**dass** eine elektronische Steuereinheit (12) vorgesehen ist, welche das mindestens eine motorisch verstellbare Mikroskop-Funktionselement, den mindestens einen motorisch verstellbaren Mikromanipulator (7, 13) und das mindestens eine Bedienpult (8, 23, 24) vernetzt.

3. Anordnung nach einem der Ansprüche 1 oder 2, **dadurch gekennzeichnet, dass** das Bedienpult (8, 23, 24) mindestens ein Speicher-Bedienelement (9) mit einem zugeordnetem Speicher für die Speicherung und den Abruf mindestens einer ausgewählten Fokusebene oder für die Speicherung und den Abruf mindestens einer vordefinierten Einstellung des mindestens einen motorisch verstellbaren Mikromanipulators (7, 13) aufweist.

4. Anordnung nach einem der Ansprüche 1 oder 2, **dadurch gekennzeichnet, dass** das mindestens eine Bedienpult (8, 23, 24) zur Bedienung einer Kombination aus einem oder mehreren motorisch verstellbaren Mikroskop-Funktionselementen und des motorisch verstellbaren Mikromanipulators (7, 13) vorgesehen ist.

5. Anordnung nach einem der Ansprüche 1 bis 4, **dadurch gekennzeichnet, dass** das mindestens eine Bedienpult (8, 23, 24) mindestens ein Speicher-Bedienelement mit einem zugeordnetem Speicher für die Speicherung und den Abruf mindestens einer vordefinierten Einstellung mindestens eines der motorisch verstellbaren Mikroskop-Funktionselemente aufweist.

6. Anordnung nach einem der Ansprüche 1 bis 5, **dadurch gekennzeichnet, dass** an dem Mikroskop (1, 14) zwei oder mehr Mikromanipulatoren (7, 13) angeordnet sind und dass ein einziges Bedienpult (8, 23, 24) vorgesehen ist, das jeweils mindestens ein Bedienelement (9, 37, 38, 39) für mindestens einen der Mikromanipulatoren (7, 13) für die jeweilige xy-Verstellung und/oder die Höhenverstellung des mindestens einen Mikromanipulators aufweist.

7. Anordnung nach Anspruch 1, **dadurch gekennzeichnet,**
**dass** der Anordnung ein UV-Laser (27) zugeordnet wird, dessen Laserstrahl mit einer Einkoppeloptik in das Mikroskop (1, 14) eingekoppelt und zum Laserschneiden eines biologischen Objekts (16) mit einem Objektiv (3) auf das biologische Objekt (16) fokussiert wird.

8. Anordnung nach Anspruch 1, **dadurch gekennzeichnet,**
**dass** der Anordnung ein IR-Laser (27) zugeordnet wird, dessen Laserstrahl mit einer Einkoppeloptik in das Mikroskop (1, 14) eingekoppelt und mit einem Objektiv (3) auf das biologische Objekt (16) fokussiert wird und zum Erfassen, Halten und Bewegen des biologischen Objekts (16) oder Teilen des biologischen Objekts (16) verwendet wird.

9. Anordnung nach Anspruch 7 oder 8, **dadurch gekennzeichnet,**
**dass** das mindestens eine Bedienpult (8, 23, 24) mindestens ein Bedienelement (9, 37, 38, 39) zur Steuerung mindestens einer Funktion des Lasers (27) aufweist.
